Europäisches Patentamt

European Patent Office

Office européen des brevets

(19)

(11) Publication number: **0 104 023 B1**

# EUROPEAN PATENT SPECIFICATION

(45) Date of publication of patent specification: **02.05.91**

(51) Int. Cl.⁵: **G11B 15/52**, G11B 5/52, G11B 19/24

(21) Application number: **83305224.4**

(22) Date of filing: **07.09.83**

(54) **Synthetic control track signal producing apparatus and method for video tape machines.**

(30) Priority: **16.09.82 US 418865**

(43) Date of publication of application:
**28.03.84 Bulletin 84/13**

(45) Publication of the grant of the patent:
**02.05.91 Bulletin 91/18**

(84) Designated Contracting States:
**AT CH DE FR GB LI NL SE**

(56) References cited:
**GB-A- 2 063 526**
**GB-A- 2 071 879**
**US-A- 3 968 518**

**PATENTS ABSTRACTS OF JAPAN, vol. 7, no.
18 (P-170)[1163], 25th January 1983; & JP - A
- 57 172 562 (HITACHI SEISAKUSHO K.K.)
23.10.1982**

**PATENTS ABSTRACTS OF JAPAN, vol. 7, no.
87 (P-190)[1232], 12th April 1983; JP - A - 58
12 152 (HITACHI SEISAKUSHO K.K.)
24.01.1983**

**PATENTS ABSTRACTS OF JAPAN, vol. 5, no.**

**179 (E-82)[851], 17th November 1981; JP - A -
56 104 587 (AKAI DENKI K.K.) 20.08.1981**

(73) Proprietor: **AMPEX CORPORATION
401 Broadway M.S. 3-35
Redwood City California 94063-3199(US)**

(72) Inventor: **Rodal, David R.
3363 Kenneth Drive
Palo Alto California(US)**

(74) Representative: **Horton, Andrew Robert Grant
et al
BOWLES HORTON Felden House Dower
Mews High Street
Berkhamsted Hertfordshire HP4 2BL(GB)**

## Description

This invention relates to a method and apparatus for controlling tape speed in a video tape recording and/or reproducing machine and more particularly to a method and apparatus for generating a synthetic control track signal during playback from reproduced video vertical synchronizing information for use in servo controlling the tape drive.

Magnetic video tape recording and/or reproducing machines generally operate by passing magnetic recording tape in transducing relation to one or more rotating transducers or heads which scan the tape at a very high rate relative to the tape speed. The heads record a plurality of generally parallel tracks on the tape which contain video information, and the same heads or other heads reproduce the recorded video information signal during playback by scanning the recorded tracks.

During recording, a control track head records control track signal information typically on a longitudinal track along one side of the tape simultaneously as video information is recorded by a rotating video head scanning along the tape and spaced from the longitudinally extending control track. The control track signal information typically is a frame rate square wave. For many helical wrap video recorders which record a field of information along a single track during each revolution of the video head, the frame rate control track signal changes state once for each field of recorded video information. The control track signal information also often includes periodic color framing pulses for identifying specific fields in a multifield sequence.

The longitudinal transport speed of the tape must be accurately controlled during playback and, for that reason, the tape is moved by a motor driven capstan controlled by a capstan servo mechanism in accordance with a capstan tachometer signal and with the timing relationship between a reference vertical sync signal and control track signal information reproduced from the tape during playback.

If for any reason a control track signal is improperly recorded relative to the recorded positions of the video tracks along the tape, the video head will be mispositioned relative to the recorded video track during playback operations, although the capstan servo will cause the tape to be transported at the proper playback speed. If the control track signal does not exist, the capstan servo may not be able to move the tape at all, and even if it is able to do so, the tape transport is not properly synchronized to the controlling reference. For example, control track information may not be recorded during an insert edit, and it may not be recorded due to various malfunctions and the like. In other cases, the control track information may be inverted in phase.

Recent developments in helical wrap video tape recording and reproducing machines have included what is commonly referred to as an automatic scan tracking system. In such machines, the reproducing head is mounted at the end of a movable element that is controllable to move the head transversely relative to the longitudinal direction of a recorded track so as to maintain the head on the track to provide a reproduced signal of superior quality, even when the tape is being transported at a speed other than normal reproducing speed, such as during special motion effects of still frame reproducing, slow motion reproducing and fast motion reproducing. Such systems generate an error signal indicating whether the head is off track and the error signal is used in a head positioning servo for moving the movable element to return the head to the center of the recorded track. If the machine is reproducing recorded video at the normal speed and the automatic scan tracking error signal is monitored, the error signal will provide an indication of the tape speed deviation from normal tape speed as well as head to tape position deviation and this error..signal can be used to control the capstan servo to generally maintain proper tape speed and proper head to tape position. However, the automatic scan tracking error signal is not entirely reliable in providing control of the capstan servo because it does not rely on any well defined timing signals and is subject to mechanical and electrical variations which can affect the accuracy of the control of the capstan servo.

'Accordingly, an object of this invention is to provide a new and improved method and apparatus for generating a synthetic control track signal for use by the capstan servo for controlling tape speed in a video tape recording and/or reproducing machine whereby the adverse effects of improperly recorded or missing control track signals are obviated. or reduced.

An additional or alternative object is to provide a new and improved synthetic control track signal which is generated during playback using vertical synchronizing signal information.

An additional or alternative object is to provide a new and improved method and apparatus for generating a synthetic control track signal during video playback operations for use in synchronizing the transport of the tape to system reference while simultaneously recording a new control track signal on the tape.

A document disclosing the features of the pre-characterising portions of the independent claims in US-A-3968518.

In one aspect the invention provides a servo for controlling, with respect to a reference timing signal, the relative transport speed between an information transducing head and a recording medium in a recording and/or reproducing machine having a control head for reproducing a control timing signal recorded along the medium, so that the time base of the control timing signal is indicative of the said relative transport speed, and an information head for reproducing recorded information signals, said information signal containing a known timing component related in time to the control timing signal and whose time base corresponds to the said relative transport speed, the servo being characterised by a comparator for comparing the reference timing signal and the control timing signal to generate an error signal in accordance with timing differences between the compared signals; means for generating a synthesized control timing signal in response to the occurrence of the timing component contained in the reproduced information signal; means for coupling the synthesized control timing signal to the comparator in place of the reproduced control timing signal; and means responsive to the error signal generated by the comparator upon the comparison of the reference timing signal and the synthesized control timing signal for controlling the said relative transport speed in accordance with the timing differences represented in said error signal.

In another aspect the invention provides a magnetic video tape recording and/or reproducing machine of the type which has a rotary reproducing head, a capstan, a capstan servo for controlling the capstan during recording and/or reproducing operations with a tape whose transport is controlled by the capstan, and a stationary control track head for recording and/or reproducing control track signal information for use by the capstan servo, characterised by a circuit for generating a synthetic control track signal which has not been recorded on the tape, this circuit comprising means for generating a square wave signal having a predetermined period, means for coupling said square wave signal generating means to be synchronized to a vertical sync signal of the video information signal reproduced by said rotary reproducing head, and means for inserting a narrow pulse in said square wave signal adjacent a predetermined transition and at a predetermined multiple of the square wave period.

The invention also provides a method of recording a control track signal longitudinally along a tape transported in a helical path under the control of a capstan servo as video information is reproduced from the tape, the reproduced video information containing a vertical synchronisation signal and being reproduced by a helical scan video tape recording and/or reproducing machine including a control track signal record and/or reproduce system and a video information signal record and/or reproduce system, the method being characterised by generating a synthesized control track signal from the vertical synchronisation signal contained in the reproduced video information; controlling the capstan servo with the synthesized control track signal; disabling the control track signal record and/or reproduce system from reproducing recorded control track signals while enabling such system to record control track signals; and enabling the video information signal record and/or reproduce system to reproduce recorded video information signals while disabling such system from recording video information signals.

In another aspect the invention also provides a method of generating a synthetic control track signal for a magnetic video tape recording and/or reproducing machine of the type which has a capstan, a capstan servo for controlling the capstan during recording and/or reproducing operations with a tape whose transport is controlled by the capstan and a stationary control track head for recording and/or reproducing control track signal information for use by the capstan servo, the method comprising: generating a square wave signal of a predetermined period synchronously relative to the occurrence of a vertical synchronisation signal of video information reproduced from the tape by a video head; and inserting a narrow pulse in said square wave signal adjacent a predetermined square wave signal transition and at a predetermined multiple of the square wave period.

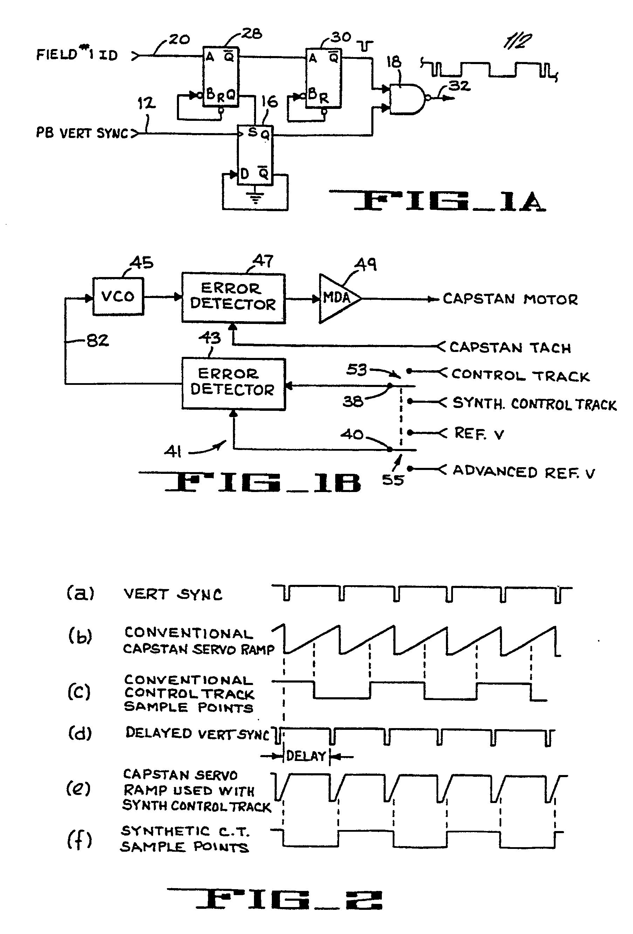

Other objects of the present invention will become apparent from the following detailed description, in conjunction with the accompanying drawings in which Figure 1A is a block diagram of a circuit for generating a synthetic control track signal in accordance with this invention;

FIG. 1B is a block diagram of a common capstan servo arranged to be operated in accordance with this invention.

FIGS. 2(a) through 2(f) are timing diagrams illustrating the relationship between normal and synthetic control track signal information, vertical synchronizing information, and the capstan servo ramp voltage;

FIG. 3 illustrates a detailed schematic of the control track error detector circuit shown in FIG. 1B; and

FIG. 4 is a block diagram of a video signal record and playback system and a control track signal record and playback system arranged so that normal control track record operations can occur selectively during video playback operations.

Broadly stated, the present invention is directed to a method and apparatus for generating a synthetic control track signal during the reproduction of recorded video information for use in a video tape recording and reproducing machine. The synthetic control track signal is utilized to control the capstan servo for moving the tape at the normal reproducing speed when the control track signal recorded on tape is defective or nonexistent so that the tape transport is maintained in synchronism with the system reference. It should be appreciated that when many helical wrap recording machines perform an insert edit operation, i.e., they record new material over a prior recording, the new material is added in an insert edit mode whereby a new control track signal is not recorded. If an insert edit recording operation is performed on a portion of previously unrecorded or blank tape, there obviously will not be a control track signal recorded along the blank portion of the tape. If this occurs, then upon subsequent reproducing of the new material, the capstan servo will be unable to operate properly because of the absence of the control track signals in the portion of the tape corresponding to the recorded location of the new material.

The present invention generates a synthetic control track signal utilizing recorded video information signals, which is applied to the capstan servo otherwise operated in a conventional manner. The synthetic control track generating circuitry embodying the present invention is also adapted to insert the color frame field identification pulses in the synthetically generated control track signal as is desired. In other words, a "field one" identification pulse is applied to the control track square wave signal as is desired. Another feature of the present invention is that the synthetic control track signal can be used to control the capstan servo to drive the tape at the proper speed during reproducing, and if a control track signal missing from the recorded control track, the apparatus can simultaneously activate the control track record circuitry for the purpose of recording a control track signal at the missing location. Once the control track is recorded in the conventional manner, then the tape may be played in the normal fashion by any conventional recording and reproducing machine.

The synthetic control track signal generating circuitry utilizes the field one identification signal from a common color framer circuit included in video tape recording and/or reproducing machines, which in and of itself does not form a part of the present invention. The field one identification signal, together with playback vertical sync are used to generate the synthetic control track signal. It should be appreciated that the relationship of the conventionally recorded control track signal to vertical sync is such that each field rate transition of the control track signal is recorded on the tape approximately half way between the occurrences of successively reproduced vertical sync signals. With the circuitry of the present invention, the transitions of the synthetic control track are essentially coincident with vertical sync, which means that they are offset relative to the occurrences of the conventionally recorded control track transitions, but the offset can be compensated for in the conventional capstan servo, with only slight modification.

More particularly, it should be appreciated that the control track signals are recorded and reproduced by a fixed head and that the control track transitions are reproduced in response to the tape being moved relative to the control track head. It should also be appreciated that the speed of the tape is relatively slow compared to the speed of rotation of the head that scans the recorded video tracks during reproducing. Since the synthetic control track signal is essentially derived from active video information being read by the rotated video head mounted on the scanning drum, the movement of the rotated head in the longitudinal direction of the tape as it reproduces video information is approximately 100 times the speed of movement of the tape past the control track head. For this reason, it is necessary to compensate for this significant difference in relative head to tape speeds. In a conventional capstan servo such as employed in the VPR-20 Video Production Recorder manufactured by Ampex Corporation, the control track error detector includes means for generating a voltage ramp by charging a capacitor and at a particular time, the value of the ramp is sampled to obtain a control track determined tape speed related error voltage that is applied to the capstan servo for the purpose of controlling the capstan drive and, hence, tape speed. The ramp is reset by a reference frame sync related signal and the ramp is sampled by the occurrence of a reproduced control track transition. Because the movement of the rotating video reproduce head relative to the transported tape is 100 times faster than the movement of the tape past the control track head, it is necessary to increase the slope of the generated ramp by a corresponding factor of 100 without changing the rate of the generation of the ramp signals. When this is done, the relative timing of the sampling of the ramp in accordance with the present invention is slightly different from the timing of the sampling in the conventional capstan servo, but it is approximately the same by virtue of the fact that the synthetic control track signal is essentially synchronized to the reproduced off tape vertical sync extractred from the reproduced video signal. There is a small difference, however, and for this reason, the reference vertical sync that is applied to reset the ramp is slightly advanced in time relative to the time of occurrence of the actual reference vertical sync used for such purpose when the servo is being operated under the control of the synthetic control track signal.

Stated in other words, the synthetic control track signal has transitions coincident with vertical sync which means that the occurrence of a control track transition is approximately 180° out of phase relative to a conventional control track transition. However, the ramp generator has a ramp slope that is 100 times steeper than the slope of the ramp signal used in a conventional capstan servo, which means that in the capstan servo of the present invention the ramp signal generated in the control track error detector must be sampled much sooner relative to a ramp signal in the conventional capstan servo. The reference vertical sync signal which resets the ramp when a synthetic control track is used is normally delayed in the conventional capstan servo by a full field in a circuit that does not in itself form a part of the present invention. By shortening the delay by a small amount, the delayed reference vertical sync will be advanced in time a small amount relative to that found in the conventional capstan servo. This has the effect of providing the final correction to the capstan servo so that the control track related error signal that the capstan servo uses to control the capstan speed is essentially identical, whether the synthetic control track or the conventional control track signal is used to sample the ramp signal.

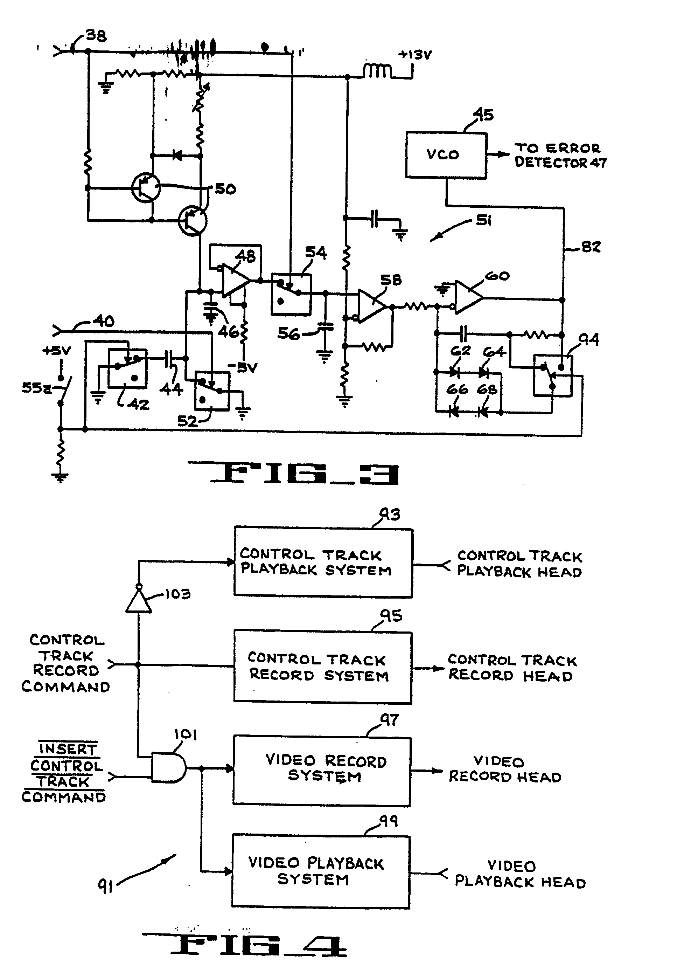

Turning now to the drawings, the manner in which the synthetic control track signal is generated in accordance with the present invention is shown in FIG. 1A. Vertical sync is extracted from the reproduced video information by conventional circuitry (not shown) found in the aforementioned Ampex manufactured video tape recording and/or reproducing machine as the playback video head scans the various tracks, and is provided at an input 12 and coupled to the clock input of a flip-flop 16. A No. 1 field identification signal (of a four field sequence in a NTSC format color video information signal and of an eight field sequence in a PAL format color video information signal) also conventionally extracted from the reproduced video information signal is provided to a delay one shot circuit 28. The delay circuit 28 provides an output signal to the "set" input terminal of the flip-flop 16 to synchronize the same to the occurrence of the field No. 1 identification signal. The time constant of the one shot circuit 28 is set to properly locate the leading edge of the field No. 1 identification signal relative to the proximate control track transition of the synthetic control track signal into which the identification signal is inserted. When connected as shown, the flip-flop 16 is clocked by playback vertical sync and operates as a divide by two divider and provides a 30 Hertz (Hz) frame rate square wave signal at its output. The period of the square wave signal generated by the flip-flop 16 is therefore equal to that of a normal control track signal. However, the 60 Hz rate transitions of the square wave signal are coincident with the 60 Hz vertical sync signal, whereas the transitions of conventional control track signals are offset relative to vertical sync as is apparent from FIGS. 2(a) and 2-(c).

The square wave signal is employed to form a synthetic control track signal and, preferably, is combined with a short pulse to provide field identification information as is desired. The field identification pulse is added to the synthetic control track square wave signal synthesized by the flip-flop 16. The circuitry shown in FIG. 1 provides a narrow pulse after the field No. 1 identification signal is received. It is delayed by the amount of the delay provided by the one shot 28. The delay circuit 28 times out and its $\overline{Q}$ output is coupled to trigger a monostable multivibrator, or one-shot 30. The one-shot 30 responsively produces a narrow pulse at the proper time for adding to the square wave signal as the desired field identification signal and has a controlling time constant that is set to effect the generation of a field No. 1 identification signal of common duration for insertion in the synthetic control track signal. For a NTSC format color video information signal system the field No. 1 identification signal is inserted in the synthesized square wave signal to occur every two periods of the signal, since the identification signal is at a rate of 15 HZ (or 1/2 the frequency of the 30 HZ square wave signal). For a PAL system, the field No. 1 identification signal is at a rate of 1/8 the frequency of the synthesized square wave signal, hence, is inserted to occur every four periods of the synthesized signal. The output of the one-shot 30 is combined with the square wave of the flip-flop 16 in an NAND gate 18, and a synthetic control track signal having field identification signal information is produced at an output 32.

As previously mentioned, the timing of the synthetic control track is different from that of the conventional control track signal, which signal requires some modification for use in the operation of a capstan servo. When the tape is driven at the proper speed under servo control relative to the conventional control track and capstan tachometer signals, the control track signal transitions occur between vertical sync pulses as shown in FIGS 2-(a) and 2(c). With reference to FIG. 1B, the capstan servo 41 included in the aforementioned Ampex manufactured video production recorder includes a control track error detector 43 that generates a control track related error signal in the form of a tape speed related voltage level that controls a following voltage controlled oscillator 45, which provides an output signal at a frequency that determines the speed of the capstan motor. This output signal is coupled to one input of a capstan tachometer error detector 47 and serves as a reference signal for comparison to the capstan tachometer signal. This error detector 47 provides a capstan servo error signal that is coupled to the capstan motor drive amplifier circuit 49 that responsively controls the drive provided to the capstan motor (not shown) to maintain the transport of the tape at the desired speed.

The control track related error signal is generated by sampling a ramp output of a linear ramp generator, with the sample being taken and held at a particular time, such as at the time of a control track transition. The ramp is reset by a delayed reference vertical sync signal. Referring to FIGS. 2-(b) and 2(c), the servo is controlled by a conventional control track signal as shown. Samples are taken at the occurrences of control track transitions, which nominally occur at the midpoints of the occurrences of the voltage ramp signals when the tape is transported at the correct normal playback speed. Variations in the occurrences of the control track transitions relative to the generation of the ramp signal result in the ramp signal being sampled at points along the slope of the ramp signal which are either higher (tape speed too slow) or lower (faster tape speed too fast) than the midpoint of the ramp signal.

If a control track signal is generated using vertical sync pulses extracted from the video information signal reproduced by the rotating video playback head, the slope of the ramp must be increased because the head rotates, hence, scans along the tape much faster than the longitudinal speed of the tape past the control track playback head. In an interval corresponding to about the duration of 2-1/2 horizontal lines, or about 0.01 of the duration of a video field, the video head passes a longitudinal length of tape which corresponds to the distance the tape moves relative to the conventional stationary control track playback head during the reproduction of one video field. Thus, to compensate for the loss in sensitivity produced by the 100 times increase in the head to tape speed of the video head relative to the head to tape speed of the control track playback head, the slope of the ramp must be increased by the same factor to obtain the same resulting sensitivity.

When the synthetic control track signal is used to control the capstan servo, the slope of the ramp is sharply increased as shown by comparing FIGS. 2(b) with an exaggerated slope shown in FIG 2(e). The slope is increased by switching switch 42 (FIG. 3) to a position opposite that shown, which effectively removes the larger capacitor 44 from the ramp generating circuit included in the control track error detector 43 and indicated generally at 51. The ramp is reset by switch 52 responsive to the aforementioned delayed reference vertical sync. The delayed reference vertical sync is generated with an amount of delay which is changed depending upon whether regular or synthetic control track signals are used in the control track error detector 43. The delayed vertical sync is normally delayed by an interval corresponding approximately to the time of a full video field and in the synthetic control track mode, it is delayed by a slightly lesser amount to form an advanced reference vertical signal, as shown by comparing FIGS. 2(a) with 2-(d). The ramp is therefore reset slightly earlier by the advanced reference vertical signal than would otherwise occur, as seen by comparing FIGS. 2(b) and 2(c).

An important consideration is that the timing of the ramp signal sampling in the control track error detector 42 is controlled so that the desired nominal zero tape speed error voltage level is identical whether the machine is using actual or synthetic control track signals, as is evident from the sample point elevations shown in FIGS. 2(b) and 2(e). This permits the remainder of the capstan servo 41 to operate normally.

The details of a preferred ramp generating and sampling circuitry included in the control track error detector 43 is shown in FIG. 3. Either the normal control track or the synthetic control track signal is selected for coupling to an input terminal 38 by an operator controlled switch 53 shown in FIG. 1B. Similarly, the normally delayed or advanced reference vertical signal is selected for coupling to an input 40 by another operator controlled switch 55 shown in FIG. 1B, the switches 53 and 55 being conjointly operated. During normal control track operation, the switch 42 is in the position shown, and capacitors 44 and 46 are connected to an input of a buffer 48. The capacitance of the capacitor 44 is about 100 times greater than the capacitance of the capacitor 46, and both capacitors are charged by a current source 50, producing a ramp voltage at the output of the buffer 48. The delayed reference vertical sync signal, which is in the form of a pulse train, received at input 40 resets the ramp by moving a switch 52 to the illustrated position whereby the charges on the capacitors 44 and 46 are drained to ground. The switch 52 is activated by the delayed reference vertical sync applied on input 40 through the switch 55 (FIG. 1B). When the operator initiates operation of the synthetic control track mode by operation of the switch 55 (FIG. 1B), an active signal is placed on line 92 by the simultaneous closure of switch 55a. This causes switches 42 and a switch 94 to be switched to respective positions opposite those that are shown.

The ramp voltage output of the buffer 48 is sampled by the control track sample pulses corresponding to control track transitions, which occur at the 60 Hz field rate, and actuate a switch 54. The switch 54 is closed for a very short time responsive to a control track sample signal being applied thereto via line 38 and simultaneously the supply of current by source 50 is interrupted to maintain a constant level of charge on the capacitors 44 and 46 during the sampling interval. The sampled voltage is stored in a capacitor 56, which provides an input to a unity gain buffer 58. The output of the buffer 58 provides a control signal via amplifier 60 and line 82 to the voltage controlled oscillator 45 included in the capstan servo 41.

During normal control track operation, the switch 42 is in the position shown, and the capacitor 44 is in the circuit and can be charged. If the synthetic control track is to be used, the switch 42 is switched as described herein before to the position alternate to that shown to isolate the capacitor 44 from the circuit. Since the capacitance of the capacitor 44 is about 100 times greater than that of the capacitor 46, the slope of the ramp will be about 100 times greater without the capacitor 44 as described hereinbelow.

The output of the buffer 58 is applied to an amplifier 60 which includes a feedback network having four diodes 62, 64, 66 and 68, connected as shown. The diodes 62, 64, 66 and 68 limit the dynamic range of the correction by limiting the maximum speed error signal which may be generated as a result of a possible track jump that can occur with a machine that has an automatic scan tracking system of the type previously described.

Existing video tape recording and/or reproducing machines are arranged to have their control track signal record and playback system and video signal record and playback system in the same record or playback mode other than such machines arranged to perform confidence recording operations In such machines, the video signal record system and video signal playback system are simultaneously enabled so that as video information is being recorded by one video head a separate video head reproduces previously recorded video information. During such operation, however, the transport of the tape is not servo controlled with respect to recorded control track. The generation of the synthetic control track signs in accordance with the present invention now makes it possible to synchronously operate a video tape recording and/or reproducing machine so that normal video playback operations and control track record operations can synchronously occur relative to the system reference in the absence of a control track signal or the presence of an improperly recorded control track signal. As described hereinbefore, this is made possible because the synthetic control track signal permits the control of the transport of the tape synchronously with the system reference during normal video playback operations without need of control track signals reproduced from the tape. As explained hereinbefore, the synthetic control track signal is generated from the vertical sync signal extracted from the reproduced video information signal. Therefore, the capstan record/playback signal system and video record/playback signal system can be in opposite operating modes, including the control track signal system in a record mode while the video signal system is in a playback mode. This enables the control track signal system to be operated to record a new control track signal on a tape when the video signal system is reproducing previously recorded video information from the same tape.

The foregoing will be further appreciated upon consideration of FIG. 4, which illustrates a control track signal and video signal record and playback system 91 organization of a typical video tape recording and/or reproducing machine, such as the aforementioned Ampex manufactured video production recorder. As illustrated in FIG. 4, the control track signal playback system 93 has its control track signal input coupled to a control track playback head (not shown) and the control track signal record system 95 has its control track signal output coupled to a control track record head (not shown). In practice, a single head serves to record and playback control track signals with respect to the tape, that head being switched electronically to the proper part of the control track signal system in accordance with operating mode selected for the system. Similarly, the video signal record system 97 has its video signal output coupled to a video record head (not shown) and the video signal playback system 99 has its video signal input coupled to a video playback head (not shown). In practice, a single video head can be used for both recording and playback operations, with an electronically controlled switch coupling the video head to the proper part of the video signal system in accordance with the operating mode seleted for the system. The aforedescribed control track and video signal systems may be conventional systems found in existing video tape recording and/or playback machines. However, in accordance with the present invention, the operating modes of the control track signal system and video signal system are controlled relative to the operation of the synthetic control track signal generator so that the two systems can be in opposite operating modes, namely, the control track signal system in the record mode while the video signal system is in the playback mode. This is achieved by the generation of two operator initiated commands; one being the control track record command that is coupled to enable the control track record system 95, and the other an inverted form of the insert control track command. The two commands are coupled to separate inputs of an AND gate 101, for selectively disabling the video signal record system 97 while enabling the video signal playback system 99 when an insert control track command is generated coincidentally with the control track record command. More specifically, the AND gate 101 generates logical low level output which is coupled to the video signal record system 97 and the video playback system 99 in the absence of an insert control track command, signified by a logical low level signal at the input to the AND gate. This logical low level signal at the output of the AND gate 101 has no effect on the control of the operative mode of the video signal system. When an insert control track command is generated, however, a logical high level signal is coupled to the input of the AND gate 101 and, if a control track record command is also received at the input of the AND gate, the output of the AND gate is at a logical high level. The logical high level signal disables the video signal record system 97 while enabling the video signal playback system 99, whereby the video signal system can not be placed in a record mode but is able to be operated in the playback mode. The control track record command is also coupled to the control track signal record system 95 and through an inverter 103 to the control track signal playback system 93. The presence of a control track record command enables the control track record system 95 while simultaneously disabling the control track record system 93. In this manner new control track signals can be recorded on a tape through the normal operation of the control track signal record system 95 while video information is simultaneously reproduced from the tape through the normal operation of the video signal playback system 99.

By generating a synthetic control track in the manner described, the capstan and tape speed can be properly controlled during reproducing even when there is no recorded control track signal, or when the control track signal has been improperly recorded. Also, control track signals can be recorded so that the tape (or other record media) will have a properly recorded control track signal for future reproduction.

It should be understood that although preferred embodiments of the present invention have been illustrated and described, various modifications thereof will become apparent to those skilled in the art. In helical scan video tape recording and/or reproducing machines, it is possible to generate a synthetic control track signal from the vertical sync signal extracted from the reproduced video information signal because the entracted vertical sync signal is related in time to a properly recorded control track signal and the time bases of the information signal and control track signal are proportional to the speed of transport of the tape. Consequently, any control track signal or other comparable timing signal recorded on tape or other record media can be synthesized in accordance with the present invention from a known timing component included in an information signal if the recorded information signal and timing signal are related in time, and the time bases of the recorded information signal and timing signal are proportional to the relative timing signal head to media speed.

## Claims

1. A servo for controlling, with respect to a reference timing signal, the relative transport speed between an information transducing head and a recording medium in a recording and/or reproducing machine having a control head for reproducing a control timing signal recorded along the medium, so that the time base of the control timing signal is indicative of the said relative transport speed, and an information head for reproducing recorded information signals, said information signal containing a known timing component related in time to the control timing signal and whose time base corresponds to the said relative transport speed, the servo being characterised by a comparator (43) for comparing the reference timing signal and the control timing signal to generate an error signal (82) in accordance with timing differences between the compared signals; means (28,16) for generating a synthesized control timing signal in response to the occurrence of the timing component contained in the reproduced information signal; means (53) for coupling the synthesized control timing signal to the comparator (43) in place of the reproduced control timing signal; and means (45,47,49) responsive to the error signal generated by the comparator (43) upon the comparison of the reference timing signal and the synthesized control timing signal for controlling the said relative transport speed in accordance with the timing differences represented in said error signal.

2. A servo according to claim 1 in which the reproduced control timing signal is obtained from a control track recorded longitudinally along a tape and the synthesized control timing signal is derived from a vertical sync signal recorded along the tape in a path extending obliquely to the length of the tape.

3. A magnetic video tape recording and/or reproducing machine of the type which has a rotary reproducing head, a capstan, a capstan servo for controlling the capstan during recording and/or reproducing operations with a tape whose transport is controlled by the capstan, and a stationary control track head for recording and/or reproducing control track signal information for use by the capstan servo characterised by a circuit (16,28,30,32) for generating a synthetic control track signal which has not been recorded on the tape, this circuit comprising means (16) for generating a square wave signal having a predetermined period, means (12) for coupling said square wave signal generating means to be synchronized to a vertical sync signal of the video information signal reproduced by said rotary reproducing head, and means (18,30) for inserting a narrow pulse in said square wave signal adjacent a predetermined transition and at a predetermined multiple of the square wave period.

4. A machine according to claim 3 wherein said pulse inserting means (18,30) comprises a monostable multivibrator (30) which produces a narrow pulse responsive to receiving a delayed field identification signal being applied thereto, and a logic gate (18) connected to said multivibrator and said square wave generating means for combining said signals.

5. A machine according to claim 3 or claim 4 wherein said square wave signal generating means comprises a first digital device (16) which generates a frame rate square wave signal clocked by the vertical synchronisation signal reproduced by said rotary reproducing head, and a monostable multivibrator (28) responsive to field identification information contained in a multifield reference signal, said monostable multivibrator being coupled to provide an input to said first digital device (16) for synchronizing said square wave signal generating means to a predetermined field in a multifield sequence of the reference signal.

6. A machine according to any one of claims 3 to 5, wherein said capstan servo includes a ramp signal generator (50,46) that is reset by a reference vertical sync signal, which ramp signal is sampled by a sample and hold circuit (54,56) controlled by control track transitions for generating an error signal for controlling the capstan servo, there being provided means (42,44) for increasing the slope of the ramp signal produced by the ramp signal generator by a factor corresponding to the difference in relative head to tape speed between the video head reproducing the video information containing said vertical synchronisation signal and the control track head; and means (52) for adjusting the timing of the resetting of said ramp signal generator to thereby enable the generated ramp signal to be sampled when its slope is increased at the same nominal voltage as would occur using the control track signal reproduced from the tape for generating an error signal for use by the capstan servo.

7. A method of recording a control track signal longitudinally along a tape transported in a helical path under the control of a capstan servo as video information is reproduced from the tape, the reproduced video information containing a vertical synchronisation signal and being reproduced by a helical scan video tape recording and/or reproducing machine including a control track signal record and/or reproduce system and a video information signal record and/or reproduce system, the method being characterised by generating a synthesized control track signal from the vertical synchronisation signal contained in the reproduced video information; controlling the capstan servo with the synthesized control track signal; disabling the control track signal record and/or reproduce system from reproducing recorded control track signals while enabling such system to record control track signals; and enabling the video information signal record and/or reproduce system to reproduce recorded video information signals while disabling such system from recording video information signals.

8. A method of generating a synthetic control track signal for a magnetic video tape recording and/or reproducing machine of the type which has a capstan, a capstan servo for controlling the capstan during recording and/or reproducing operations with a tape whose transport is controlled by the capstan and a stationary control track head for recording and/or reproducing control track signal information for use by the capstan servo, the method comprising: generating a square wave signal of a predetermined period synchronously relative to the occurrence of a vertical synchronisation signal of video information reproduced from the tape by a video head; and inserting a narrow pulse in said square wave signal adjacent a predetermined square wave signal transition and at a predetermined multiple of the square wave period.

9. A method according to claim 8 wherein said predetermined period is equivalent to the period of the control track signal.

10. A method according to claim 8 or claim 9 wherein said predetermined transition is a negative-going transition of said square wave signal.

11. A method according to any one of claims 8 to 10 wherein said predetermined multiple of the square wave period is two, the video information signal having an NTSC format.

12. A method according to any one of claims 8 to 10 wherein said predetermined multiple of said square wave period is four, the video information signal having a PAL format.

13. A method according to any one of claims 9 to 12, said capstan servo being of the type which includes a ramp signal generator that is reset by a reference vertical synchronisation signal, which ramp signal is sampled by a sample and hold circuit controlled by control track transitions for generating an error signal for controlling the capstan servo, the method further comprising, during a signal reproducing operation, increasing the slope of the ramp signal produced by the ramp signal generator by a factor corresponding to the difference in relative head to tape speed between the video head reproducing the video information containing said vertical synchronisation signal and the control track head; and adjusting the timing of the resetting of said ramp signal generator to thereby enable the generated ramp signal to be sampled, to provide an error signal for the capstan servo, at the same nominal voltage as would occur using the control track signal.

14. A method according to claim 13 wherein said slope is increased by a factor of 100.

**Revendications**

1. Asservissement pour commander, par rapport à un signal de rythme de référence, la vitesse de transport relative entre une tête transductrice d'informations et un support d'enregistrement dans une machine d'enregistrement et/ou de reproduction ayant une tête de commande pour reproduire un signal de rythme de commande enregistré le long du support, de telle manière que la base de temps du signal de rythme de commande est représentative de ladite vitesse de transport relative, et une tête d'information pour reproduire des signaux d'information enregistrés, ledit signal d'information contenant une composante de rythme connue en relation temporelle avec le signal de rythme de commande et dont la base de temps correspond à ladite vitesse de transport relative, l'asservissement étant caractérisé par: un comparateur (43) pour comparer le signal de rythme de référence au signal de rythme de commande en vue de générer un signal d'erreur (82) conformément à des différences de rythme entre les signaux comparés; des moyens (28,16) pour générer un signal de rythme de commande synthétisé en réponse à l'apparition de la composante de rythme contenue dans le signal d'information reproduit; des moyens (53) pour relier le signal de rythme de commande synthétisé au comparateur (43) à la place du signal de rythme de commande reproduit; et des moyens (45, 47, 49) réagissant au signal d'erreur généré par le comparateur (43) lors de la comparaison entre le signal de rythme de référence et le signal de rythme de commande synthétisé en vue de commander ladite vitesse de transport relative conformément aux différences de rythme représentées dans ledit signal d'erreur.

2. Asservissement selon la revendication 1, dans lequel le signal de rythme de commande reproduit est obtenu à partir d'une piste de pilotage enregistrée longitudinalement le long d'une bande et le signal de rythme de commande synthétisé est issu d'un signal de synchronisation verticale enregistré le long de la bande suivant un trajet s'étendant obliquement par rapport au sens longitudinal de la bande.

3. Machine d'enregistrement et/ou de reproduction sur bande vidéo magnétique du type comportant une tête de reproduction rotative, un cabestan, un asservissement de cabestan pour commander le cabestan pendant les opérations d'enregistrement et/ou de reproduction avec une bande dont le transport est commandé par le cabestan, et une tête de piste de pilotage fixe pour enregistrer et/ou reproduire des informations de signaux de piste de pilotage destinées à être utilisées par l'asservissement de cabestan, caractérisée par un circuit (16, 28, 30, 32) pour générer un signal synthétique de piste de pilotage qui n'a pas été enregistré sur la bande, ce circuit comprenant des moyens (16) pour générer un signal à onde carrée ayant une période prédéterminée, des moyens (12) pour relier lesdits moyens générateurs de signaux à onde carrée à synchroniser avec un signal de synchronisation verticale dudit signal d'information vidéo reproduit par ladite tête de reproduction rotative, et des moyens (18, 30) pour insérer une impulsion étroite dans ledit signal à onde carrée au voisinage d'une transition prédéterminée et suivant un multiple prédéterminé de la période de l'onde carrée.

4. Machine selon la revendication 3, dans laquelle lesdits moyens d'insertion d'impulsion (18, 30) comprennent un multivibrateur monostable (30) qui produit une impulsion étroite en réponse à la réception d'un signal d'identification de trame retardé qui lui est appliqué, et une porte logique (18) reliée audit multivibrateur et auxdits moyens générateurs d'ondes carrées pour combiner lesdits signaux.

5. Machine selon la revendication 3 ou la revendication 4, dans laquelle lesdits moyens générateurs de signaux à onde carrée comprennent un premier dispositif numérique (16) qui génère un signal à onde carrée de fréquence image piloté par le signal de synchronisation verticale reproduit par ladite tête de reproduction rotative, et un multivibrateur monostable (28) réagissant à l'information d'identification de trame contenue dans un signal de référence multi-trames, ledit multivibrateur monostable étant relié de façon à fournir une entrée audit premier dispositif numérique (16) pour synchroniser lesdits moyens générateurs de signaux à onde carrée avec une trame prédéterminée d'une séquence multi-trames du signal de référence.

6. Machine selon l'une quelconque des revendications 3 à 5, dans laquelle ledit asservissement de cabestan comprend un générateur de signaux en rampe (50,46) qui est ré-initialisé par un signal de synchronisation verticale de référence, ledit signal en rampe étant échantillonné par un circuit échantillonneur-bloqueur (54, 56) commandé par des transitions de piste de pilotage pour générer un signal d'erreur servant à commander l'asservissement de cabestan, des moyens (42, 44) étant prévus pour augmenter la pente du signal en rampe produit par le générateur de signaux en rampe d'un facteur correspondant à la différence de vitesse relative tête-bande entre la tête vidéo reproduisant l'information vidéo contenant ledit signal de synchronisation verticale et la tête de piste de pilotage; et des moyens (52) étant prévus pour ajuster le rythme de la ré-initialisation dudit générateur de signaux en rampe afin de permettre ainsi au signal en rampe produit d'être échantillonné lorsque sa pente augmente suivant la même tension nominale que celle qui se produirait si l'on utilisait le signal de piste de pilotage reproduit à partir de la bande pour générer un signal d'erreur destiné à être utilisé par l'asservissement du cabestan.

7. Procédé d'enregistrement d'un signal de piste de pilotage longitudinalement le long d'une bande transportée suivant un trajet hélicoïdal sous la commande d'un asservissement de cabestan pendant que des informations vidéo sont reproduites à partir de la bande, les informations vidéo reproduites contenant un signal de synchronisation verticale et étant reproduites par une machine d'enregistrement et/ou de reproduction sur bande vidéo à enroulement hélicoïdal comportant un système d'enregistrement et/ou de reproduction de signaux de piste de pilotage et un système d'enregistrement et/ou de reproduction de signaux d'information vidéo, le procédé étant caractérisé en ce qu'il consiste à générer un signal de piste de pilotage synthétisé à partir du signal de synchronisation verticale contenu dans les informations vidéo reproduites; à commander l'asservissement de cabestan avec le signal de piste de pilotage synthétisé; à interdire au système d'enregistrement et/ou de reproduction de signaux de piste de pilotage de reproduire des signaux de piste de pilotage enregistrés tout en autorisant un tel système à enregistrer des signaux de piste de pilotage; et à autoriser le système d'enregistrement et/ou de reproduction de signaux d'information vidéo à reproduire des signaux d'information vidéo enregistrés tout en interdisant à ce système d'enregistrer des signaux d'information vidéo.

8. Procédé de production d'un signal synthétique de piste de pilotage pour une machine d'enregistrement et/ou de reproduction sur bande vidéo magnétique du type comportant un cabestan, un asservissement de cabestan pour commander le cabestan pendant les opérations d'enregistrement et/ou de reproduction avec une bande dont le transport est commandé par le cabestan et une tête de piste de pilotage fixe pour enregistrer et/ou reproduire les informations de signaux de piste de pilotage destinées à être utilisées par l'asservissement de cabestan, le procédé consistant à: générer un signal à onde carrée d'une période prédéterminée de façon synchrone par rapport à l'apparition d'un signal de synchronisation verticale d'informations vidéo reproduites à partir de la bande par une tête vidéo; et à insérer une impulsion étroite dans ledit signal à onde carrée au voisinage d'une transition de signal à onde carrée prédéterminée et suivant un multiple prédéterminé de la période de l'onde carrée.

9. Procédé selon la revendication 8, dans lequel ladite période prédéterminée est équivalente à la période du signal de piste de pilotage.

10. Procédé selon la revendication 8 ou la revendication 9, dans lequel ladite transition prédéterminée est une transition dans le sens négatif du signal à onde carrée.

11. Procédé selon l'une quelconque des revendications 8 à 10, dans lequel ledit multiple prédéterminé de la période de l'onde carrée est deux, le signal d'information vidéo ayant un format NTSC.

12. Procédé selon l'une quelconque des revendications 8 à 10, dans lequel ledit multiple prédéterminé de la période de l'onde carrée est quatre, le signal d'information vidéo ayant un format PAL.

13. Procédé selon l'une quelconque des revendications 9 à 12, ledit asservissement de cabestan étant du type qui comporte un générateur de signaux en rampe qui est ré-initialisé par un signal de synchronisation verticale de référence, ledit signal en rampe étant échantillonné par un circuit échantillonneur-bloqueur commandé par des transitions de piste de pilotage pour générer un signal d'erreur servant à commander l'asservissement de cabestan, ledit procédé consistant en outre, pendant une opération de reproduction de signal, à augmenter la pente du signal en rampe produit par le générateur de signaux en rampe d'un facteur correspondant à la différence de vitesse relative tête-bande entre la tête vidéo reproduisant l'information vidéo contenant ledit signal de synchronisation verticale et la tête de piste de pilotage; et à ajuster le rythme de la ré-initialisation dudit générateur de signaux en rampe afin de permettre au signal en rampe produit d'être échantillonné, afin de fournir un signal d'erreur pour l'asservissement du cabestan, suivant la même tension nominale que celle qui se produirait si l'on utilisait le signal de piste de pilotage.

14. Procédé selon la revendication 13, dans lequel ladite pente est augmentée d'un facteur de 100.

**Ansprüche**

1. Servoanordnung zur referenzzeittaktsignal-abhängigen Regelung der Relativtransportgeschwindigkeit zwischen einem Informationswandlerkopf und einem Aufzeichnungsmedium in einer Aufzeichnungs- und/oder Wiedergabemaschine mit einem Regelkopf zur Wiedergabe eines auf dem Medium aufgezeichneten Regelzeittaktsignals, derart, daß die Zeitbasis des Regelzeittaktsignals ein Maß für die Relativtransportgeschwindigkeit ist, und mit einem Informationskopf zur Wiedergabe aufgezeichneter Informationssignale, welche eine bekannte, zeitlich auf das Regelzeittaktsignal bezogene Zeittaktkomponente enthalten und deren Zeitbasis der Relativtransportgeschwindigkeit entspricht, **gekennzeichnet durch** einen Komparator (43) zum Vergleich des Referenzzeittaktsignals und des Regelzeittaktsignals zwecks Erzeugung eines Fehlersignals (82) als Funktion von Zeittaktdifferenzen zwischen den verglichenen Signalen, einen Generator (28, 16) zur Erzeugung eines synthetischen Regelzeittaktsignals in Abhängigkeit vom Auftreten der im wiedergegebenen Informationssignal enthaltenen Zeittaktkomponente, Mittel (23) zur Kopplung des synthetischen Regelzeittaktsignals auf dem Komparator (43) anstelle des wiedergegebenen Regelzeittaktsignals und eine von dem durch den Komparator (43) beim Vergleich des Referenzzeittaktsignals und des synthetischen Regelzeittaktsignals erzeugten Fehlersignal angesteuerte Schaltung (45, 47, 49) zur Regelung der Relativtransportgeschwindigkeit als Funktion von durch das Fehlersignal repräsentierten Zeittaktdifferenzen.

2. Servoanordnung nach Anspruch 1, bei der das wiedergegebene Regelzeittaktsignal aus einer in Längsrichtung längs eines Bandes aufgezeichneten Regelspur gewonnen wird und das synthetische Regelzeittaktsignal aus einem Vertikalsynchronsignal abgeleitet wird, das auf dem Band in einem schräg zur Bandlängsrichtung verlaufenden Weg aufgezeichnet ist.

3. Magnetvideoband-Aufzeichnungs- und/oder Wiedergabemaschine mit einem rotierenden Wiedergabekopf, einem Bandantrieb, einer Bandantrieb-Servoanordnung zur Regelung des Bandantriebs bei Aufzeichnungs- und Wiedergabevorgängen mit einem Band, dessen Transport durch den Bandantrieb geregelt ist, und mit einem stationären Regelspurkopf zur Aufzeichnung und/oder Wiedergabe von Regelspur-Signalinformation für die Ausnutzung durch die Bandantrieb-Servoanordnung, **dadurch gekennzeichnet,** daß die Bandantrieb-Servoanordnung eine Schaltung (16, 28, 30, 32) zur Erzeugung eines nicht auf dem Band aufgezeichneten synthetischen Regelspursignals mit einem Generator (16) zur Erzeugung eines Rechtecksignals mit vorgegebener Periode, Mitteln (12) zur Kopplung des Rechtecksignal-Generators auf eine Synchronisation durch ein Vertikalsynchronsignal des durch den rotierenden Wiedergabekopf wiedergegebenen Videoinformationssignals und Mitteln (18, 30) zur Einfügung eines schmalen Impulses im Bereich eines vorgegebenen Sprungs des Rechtecksignals und mit einem vorgegebenen Vielfachen der Rechtecksignalperiode aufweist.

4. Maschine nach Anspruch 3, in der die Impulseinfügungsmittel (18, 30) einen monostabilen Multivibrator (30), welcher als Funktion der Aufnahme eines verzögerten Teilbild-Identifikationssignals einen schmalen Impuls erzeugt, und ein an den Multivibrator und den Rechtecksignal-Generator angekoppeltes logisches Gatter (18) zur Kombination dieser Signale umfaßt.

5. Maschine nach Anspruch 3 oder 4, bei welcher der Rechtecksignal-Generator eine erste digitale Anordnung (16), welche ein bildfrequentes Rechtecksignal erzeugt, das durch das vom rotierenden Wiedergabekopf wiedergegebene Vertikalsynchronsignal getaktet wird, sowie einen auf eine in einem Mehrfachteilbild-Referenzsignal enthaltene Teilbild-Identifikationsinformation ansprechenden monostabilen Multivibrator (28) umfaßt, der ein Eingangssignal für die erste digitale Anordnung (16) zur Synchronisation des Rechtecksignal-Generators auf ein vorgegebenes Teilbild in einer Mehrfachteilbild-Sequenz des Referenzsignals liefert.

6. Maschine nach den Ansprüchen 3 bis 5, in welcher die Bandantrieb-Servoanordnung folgende Komponenten enthält: einen Sägezahnsignal-Generator (50, 46), welcher durch ein Referenz-Vertikalsynchronsignal rückgesetzt wird, wobei das Sägezahnsignal zur Regelung der Bandantrieb-Servoanordnung durch eine durch Regelspursprünge gesteuerte Abtast- und Halteschaltung (54, 56) abgetastet wird, Mittel (42, 44) zur Vergrößerung der Steigung des durch den Sägezahnsignal-Generator erzeugten Sägezahnsignals um einen Faktor entsprechend der Relativgeschwindigkeit zwischen Kopf und Band zwischen dem die Videoinformation, welche das Vertikalsynchronsignal enthält, wiedergebenden Videokopf und dem Regelspurkopf und Mittel (52) zur Einstellung des Zeittaktes der Rücksetzung des Sägezahnsignal-Generators zwecks Freigabe der Abtastung des Sägezahnsignals, wenn dessen Steigung um die gleiche Nennspannung erhöht wird, wie sie auftreten würde, wenn das vom Band wiedergegebene Regelspursignal zur Erzeugung eines Fehlersignals für die Ausnutzung durch die Bandantrieb-Servoanordnung ausgenutzt wird.

7. Verfahren zur Aufzeichnung eines Regelspursignals in Längsrichtung eines Bandes, das bei Wiedergabe von Videoinformation unter Regelung einer Bandantrieb-Servoanordnung auf einem schraubenförmigen Weg transportiert wird, bei dem die wiedergegebene Videoinformation ein Vertikalsynchronsignal enthält und durch eine ein Regelspursignal- sowie ein Videoinformationsaufzeichnungssignal-Aufzeichnungs-und/oder Wiedergabesystem enthaltene Videobandaufzeichnungs-und/oder Wiedergabemaschine wiedergegeben wird, **dadurch gekennzeichnet,** daß aus dem in der wiedergegebenen Videoinformation enthaltenen Vertikalsynchronsignal ein synthetisches Regelspursignal erzeugt wird, das Regelspursignal-Aufzeichnungs- und/oder Wiedergabesystem bei seiner Wirksamschaltung zur Aufzeichnung von Regelspursignalen für die Wiedergabe aufgezeichneter Regelspursignale abgeschaltet wird und das Videoinformationssignal-Aufzeichnungs-und/oder Wiedergabesystem bei seiner Abschaltung zur Aufzeichnung von Videoinformationssignalen zur Wiedergabe aufgezeichneter Videoinformationssignale wirksam geschaltet wird.

8. Verfahren zur Erzeugung eines synthetischen Regelspursignals für eine Videoband-Aufzeichnungs- und/oder Wiedergabemaschine mit einem Bandantrieb, einer Bandantrieb-Servoanordnung zur Regelung des Bandantriebs bei Aufzeichnungs- und/oder Wiedergabevorgängen mit einem Band, dessen Transport durch den Bandantrieb geregelt wird und mit einem stationären Regelspurkopf zur Aufzeichnung und/oder Wiedergabe von Regelspur-Signalinformation für die Ausnutzung durch die Bandantrieb-Servoanordnung, **dadurch gekennzeichnet,** daß synchron zum Auftreten eines Vertikalsynchronsignals der vom Band durch einen Videokopf wiedergegebenen Videoinformation ein Rechtecksignal mit vorgegebener Periode erzeugt wird und daß in das Rechtecksignal im Bereich eines vorgegebenen Rechtecksignalsprungs ein schmaler Impuls mit einem vorgegebenen Vielfachen der Rechtecksignalperiode eingefügt wird.

9. Verfahren nach Anspruch 8, bei dem die vorgegebene Periode zur Periode des Regelspursignals äquivalent ist.

10. Verfahren nach Anspruch 8 oder 9, bei dem der vorgegebene Sprung ein negativer Sprung des Rechtecksignals ist.

11. Verfahren nach den Ansprüchen 8 bis 10, bei dem das vorgegebene Vielfache der Rechtecksignalperiode Zwei ist und das Videoinformationsignal NTSC-Format besitzt.

12. Verfahren nach den Ansprüchen 8 bis 10, bei dem das vorgegebene Vielfache der Rechtecksignalperiode Vier ist und das Videoinformationssignal PAL-Format besitzt.

13. Verfahren nach den Ansprüchen 9 bis 12 für eine Bandantrieb-Servoanordnung mit einem durch ein Referenz-Vertikalsynchronsignal rückgesetzten Sägezahnsignal-Generator, dessen Sägezahnsignal durch eine Abtast- und Halteschaltung abgetastet wird, die durch Regelspursprünge zur Erzeugung eines Fehlersignals für die Regelung der Bandantrieb-Servoanordnung gesteuert wird, bei dem bei einem Signalwiedergabevorgang die Steigung des durch den Sägezahnsignal-Generator erzeugten Sägezahnsignals um einen Faktor vergrößert wird, welcher der Differenz der Relativgeschwindigkeit zwischen Band und Kopf zwischen dem Videokopf, der die das Vertikalsynchronsignal enthaltende Videoinformation wiedergibt, und dem Regelspurkopf entspricht, und bei dem der Zeittakt der Rücksetzung des Sägezahnsignal-Generators so eingestellt wird, daß das erzeugte Sägezahnsignal zur Erzeugung eines Fehlersignals für die Bandantrieb-Servoanordnung bei der gleichen Spannung abgetastet werden kann, wie sie bei Ausnutzung des Regelspursignals auftreten würde.

14. Verfahren nach Anspruch 13, bei dem die Steigung um einen Faktor von 100 erhöht wird.

FIG_1A

FIG_1B

(a) VERT SYNC

(b) CONVENTIONAL CAPSTAN SERVO RAMP

(c) CONVENTIONAL CONTROL TRACK SAMPLE POINTS

(d) DELAYED VERT SYNC

(e) CAPSTAN SERVO RAMP USED WITH SYNTH CONTROL TRACK

(f) SYNTHETIC C.T. SAMPLE POINTS

FIG_2

15

FIG_3

FIG_4